# EUROPÄISCHE PATENTSCHRIFT

(11) **EP 2 557 462 B1**
(45) Veröffentlichungstag und Bekanntmachung des Hinweises auf die Patenterteilung: **01.01.2014**
(21) Anmeldenummer: 11176934.5
(22) Anmeldetag: 09.08.2011
(51) Int. Cl.: G05B 19/042, G06F 11/36

(54) **Verfahren zur Verarbeitung von Daten in einem Beeinflussungsgerät**
Method for processing data in an influencing device
Procédé de traitement de données dans un appareil d'influence

(43) Veröffentlichungstag der Anmeldung: 13.02.2013
(73) Patentinhaber: dSPACE digital signal processing and control engineering GmbH, 33102 Paderborn (DE)
(72) Erfinder: Dressler, Marc, 32805 Horn-Bad Meinberg (DE)

(56) Entgegenhaltungen:
- WO-A1-02/065220
- DE-A1- 10 228 610
- DE-A1-102005 051 673
- US-A1- 2005 102 579
- US-A1- 2008 162 900
- OTTERBACH R ET AL: "RAPID CONTROL PROTOTYPING - NEUE MOEGLICHKEITEN UND WERKZEUGE", VDI BERICHTE, DUESSELDORF, DE, Bd. 1828, 2. März 2004 (2004-03-02), Seiten 527-538, XP009050013, ISSN: 0083-5560
- HANSELMANN H: "Automotive control: from concept to experiment to product", COMPUTER-AIDED CONTROL SYSTEM DESIGN, 1996., PROCEEDINGS OF THE 1996 I EEE INTERNATIONAL SYMPOSIUM ON DEARBORN, MI, USA 15-18 SEPT. 1996, NEW YORK, NY, USA,IEEE, US, 15. September 1996 (1996-09-15), Seiten 129-134, XP010198777, DOI: 10.1109/CACSD.1996.555244 ISBN: 978-0-7803-3032-0
- IEEE INDUSTRY STANDARDS AND TECHNOLOGY ORGANIZATION: "The Nexus 5001 Forum (TM) - Standard for a global embedded Processor Debug Interface - Version 2.0", NEXUS 5001 FORUM, IEEE, PISCATAWAY, NJ, US, 23. Dezember 2003 (2003-12-23), Seite COMPLETE, XP002334117,

## Beschreibung

Die Erfindung betrifft ein Verfahren zur Verarbeitung von Daten gemäß dem Oberbegriff des Patentanspruchs 1.

Aus der Druckschrift DE102004027033A1 ist ein Verfahren zur Verarbeitung von Daten eines Kraftfahrzeug-Steuergeräts 11 und eines Datenverarbeitungsgeräts 12 durch ein Beeinflussungsgerät 10 bekannt. Ein Beispiel für eine mögliche Ausgestaltung eines Beeinflussungsgerätes nach Stand der Technik beschreibt die Druckschrift DE102005051673A1.

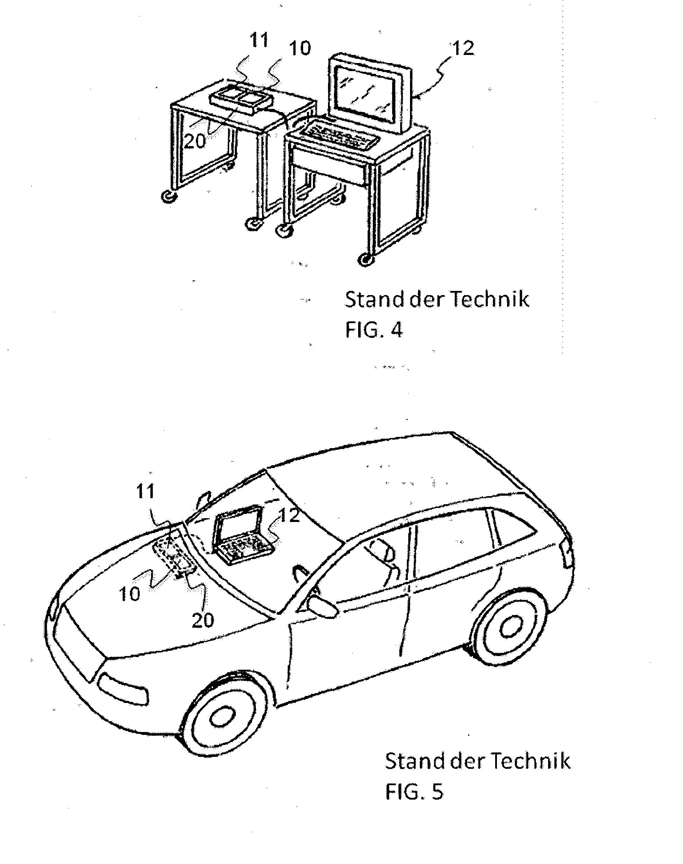

Wie in Figur 4 und Figur 5 dargestellt, ist ein Kraftfahrzeug-Steuergerät 11 mit einem Beeinflussungsgerät 10 verbunden, wobei das Kraftfahrzeug-Steuergerät 11 und das Beeinflussungsgerät 10 zusammen in einem Gehäuse 20 oder in zwei verschiedenen Gehäusen angeordnet sind. Dabei sind das Kraftfahrzeug-Steuergerät 11 und das Beeinflussungsgerät 10 entweder wie in Figur 5 dargestellt in einem Kraftfahrzeug angeordnet oder wie in Figur 4 dargestellt in einem Labor. Auf dem Kraftfahrzeug-Steuergerät 11 läuft ein erstes Programm, beispielsweise zur Steuerung eines Motors.

Ein mögliches Szenario für eine Anordnung des Kraftfahrzeug-Steuergeräts 11 und des Beeinflussungsgeräts 10 in einem Labor findet sich in der Druckschrift WO02/065220A1. Die Druckschrift DE10228610A1 beschreibt ein Verfahren zum Überprüfen eines Steuerprogramms mittels einer Bypassfunktion. Das ist ein mögliches Szenario für eine Anordnung des Kraftfahrzeug-Steuergeräts 11 und des Beeinflussungsgeräts 10 in einem Kraftfahrzeug.

Aufgabe des Beeinflussungsgeräts 10 ist zum Beispiel, Werte aus dem Kraftfahrzeug-Steuergerät 11 auszulesen und an ein Datenverarbeitungsgerät 12 weiter zu leiten, damit das Kraftfahrzeug-Steuergerät 11 von dem Datenverarbeitungsgerät 12 auf seine Funktionen getestet wird oder dem Kraftfahrzeug-Steuergerät 11 Werte von dem Datenverarbeitungsgerät 12 über eine Schnittstelle 19 zur Verfügung zu stellen. Ein Datenverarbeitungsgerät 12 ist beispielsweise ein Personal Computer, ein Simulator oder ein Prozessorboard.

Zwischen dem Kraftfahrzeug-Steuergerät 11 und dem Beeinflussungsgerät 10 werden Daten übertragen. Aus der Druckschrift DE102006062555A1 ist ein Verfahren zur Übertragung von Daten eines Kraftfahrzeug-Steuergeräts 11 an ein Beeinflussungsgerät 10 bekannt, bei dem das Beeinflussungsgerät 10 eine erste Ausführungseinheit 14, einen Speicher und eine Schnittstelle, vorzugsweise eine Debug-Schnittstelle enthält. Mit der Schnittstelle, die eine sogenannte Trace-Funktionalität aufweist, ist es möglich zu beobachtende Adressen im Speicher 13 eines Kraftfahrzeug-Steuergeräts 11 zu überwachen und die Daten an das Beeinflussungsgerät 10 zu übertragen.

Das Beeinflussungsgerät 10 ist mit dem Datenverarbeitungsgerät 12 verbunden. Der Datenaustausch zwischen dem Beeinflussungsgerät 10 und dem Datenverarbeitungsgerät 12 erfolgt gemäß dem standardisierten XCP-Protokoll und / oder dem CCP-Protokoll.

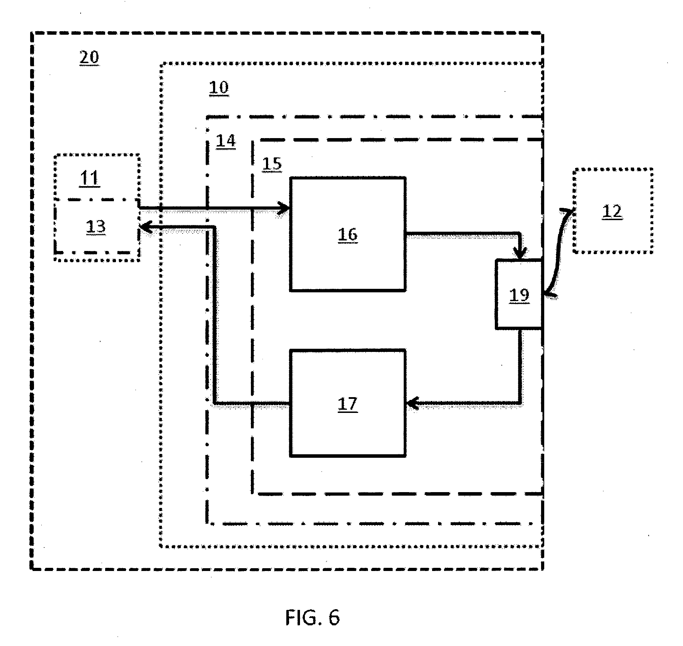

Wie Figur 6 zeigt, dient das Beeinflussungsgerät 10 als Schnittstelle zwischen dem Kraftfahrzeug-Steuergerät 11 und dem Datenverarbeitungsgerät 12. Im Stand der Technik werden die vom Kraftfahrzeug-Steuergerät 11 übertragenen Daten 16 durch das Beeinflussungsgerät 10 unverändert gemäß dem XCP-Protokoll und / oder des CCP-Protokoll an das Datenverarbeitungsgerät 12 übertragen, bzw. die vom Datenverarbeitungsgerät 12 übertragenen Daten 17 unverändert durch das Beeinflussungsgerät 10 an das Kraftfahrzeug-Steuergerät 11 übertragen. Dazu läuft auf einer ersten Ausführungseinheit 14 des Beeinflussungsgeräts 10, beispielsweise einem Prozessor, ein zweites Programm 15, welches die Datenübertragung zwischen dem Kraftfahrzeug-Steuergerät 11 und dem Datenverarbeitungsgerät 12 steuert.

Vor diesem Hintergrund besteht die Aufgabe der Erfindung darin, ein Verfahren anzugeben, das den Stand der Technik weiterbildet.

Die Aufgabe wird durch ein Verfahren zur Verarbeitung von Daten mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein Verfahren bereitgestellt zur Verarbeitung von Daten (16, 17) in einem Beeinflussungsgerät 10, wobei das Beeinflussungsgerät 10 mit einem Kraftfahrzeug-Steuergerät 11 und mit einem Datenverarbeitungsgerät 12 verbunden ist. Das Kraftfahrzeug-Steuergerät 11 und das Beeinflussungsgerät 10 sind in einem Kraftfahrzeug oder in einem Prüfstand oder an einem Laborplatz angeordnet. Auf dem Kraftfahrzeug-Steuergerät 11 läuft ein erstes Programm. Das Beeinflussungsgerät 10 enthält eine erste Ausführungseinheit 14, auf der ein zweites in Software oder Hardware implementiertes Datenverarbeitungsverfahren 15 läuft. Zwischen dem Datenverarbeitungsgerät 12 und dem Beeinflussungsgerät 10 werden Daten gemäß einem XCP-Protokoll und / oder einem CCP-Protokoll ausgetauscht. Wenn das Beeinflussungsgerät 10 einen ersten Trigger oder einen zweiten Trigger von dem Kraftfahrzeug-Steuergerät 11, von dem Datenverarbeitungsgerät 12 oder von dem Beeinflussungsgerät 10 erhält, wird der erste Trigger auf eine gültige Zuordnung zu einer in Hardware oder Software implementierten Funktion geprüft. Bei Vorliegen einer gültigen Zuordnung wird die zugeordnete Funktion gestartet. Die Funktion weist mindestens eine erste Adresse auf. Mittels der ersten Adresse wird aus einem Speicher des Beeinflussungsgeräts 10 und / oder aus einem Speicher 13 des Kraftfahrzeug-Steuergeräts 11 ein Wert ausgelesen. Weiterhin weist die Funktion eine erste Teilfunktion und / oder eine zweite Teilfunktion auf. Die erste Adresse und / oder eine zweite Adresse und / oder der Wert wird auf eine gültige Zuordnung zu der ersten Teilfunktion oder der zweiten Teilfunktion geprüft. Bei Vorliegen einer gültigen Zuordnung wird die zugeordnete Teilfunktion aufgerufen. Anhand der aufgerufenen Teilfunktion wird der Wert überprüft und / oder manipuliert und in Abhängigkeit des Ergebnisses der Prüfung der geprüfte Wert und / oder der manipulierte Wert von dem Beeinflussungsgerät 10 an das Kraftfahrzeug-Steuergerät 11 und / oder an das Datenverarbeitungsgerät 12 gesendet und / oder in den Speicher 26 des Beeinflussungsgeräts 10 abgelegt wird.

Ein Vorteil des erfindungsgemäßen Verfahrens ist es, dass Daten bzw. die Werte der Daten bereits im Beeinflussungsgerät 10 verarbeitet werden und nicht wie im Stand der Technik von dem Beeinflussungsgerät 10 unverändert weitergeleitet und erst im Datenverarbeitungsgerät 12 bzw. im Kraftfahrzeug-Steuergerät 11 verarbeitet werden. Dadurch werden die Möglichkeiten der Verarbeitung in Echtzeit, d.h. die Einhaltung vorgegebener Zeitintervalle bei der Datenverarbeitung, deutlich verbessert.

In weiteren Ausführungsformen kann die Prüfung der Zuordnung der ersten Adresse, einer zweiten Adresse bzw. des Werts zu einer der beiden Teilfunktionen zur Laufzeit, also nach dem Start der Funktion, oder auch vor dem Start der Funktion in einer Konfigurationsphase durchgeführt werden. Zum Beispiel besteht die Konfigurationsphase darin, dass nach dem Start des zweiten Programms alle Funktionen und ihre Adressen bzw. Werte auf ihre Zuordnung zu einer ersten Teilfunktion oder einer zweiten Teilfunktion geprüft werden bevor die erste Funktion gestartet wird.

In einer Weiterbildung der Erfindung wird der Inhalt der ersten Teilfunktion bzw. der zweiten Teilfunktion mittels einer Programmiersprache und / oder einer Modellierungssprache vor dem Start des zweiten Programms und / oder vor dem Start der Funktion vorgegeben. Dies bedeutet, dass eine Teilfunktion nicht immer statisch vorgegeben sein muss, sondern nach Bedarf vor dem Start des zweiten Programms oder auch nach Bedarf vor dem Start der Funktion auf ihre Funktionalität hin festgelegt wird.

Anhand einer solchen Festlegung des Inhalts wird dann in einer weiteren Ausführung ein Programmcode erzeugt und / oder ein FPGA (Field Programmable Gate Array) programmiert und / oder konfiguriert.

In einer weiteren Ausführungsform wird mittels der ersten Teilfunktion oder der zweiten Teilfunktion ein Datenformat festlegt, beispielsweise ein Datenformat, bei dem die Daten um eine Checksumme erweitert sind, damit fehlerhafte Datenübertragungen erkannt werden. Anschließend werden vom Beeinflussungsgerät 10 an das Datenverarbeitungsgerät 12 oder an das Kraftfahrzeug-Steuergerät 11 zu übertragene Daten in diesem Datenformat übertragen. Dadurch ergibt sich beispielsweise der Vorteil, dass das Beeinflussungsgerät 10 flexibel für verschiedene Datenformate wird.

In einer weiteren Ausführungsform wird der Wert, der aufgrund der Abarbeitung der ersten Teilfunktion oder der zweiten Teilfunktion als fehlerhaft erkannt wird, nicht an das Datenverarbeitungsgerät 12 und / oder das Kraftfahrzeug-Steuergerät 11 übertragen. Dies hat beispielsweise den Vorteil, dass eine Datenübertragung gespart und somit Zeit eingespart wird und dass das Datenverarbeitungsgerät 12 und / oder das Kraftfahrzeug-Steuergerät 11 nicht mit fehlerhaften Werten weiterarbeitet und dazu selbst keine Gültigkeitsprüfungen der Werte durchführen muss.

In einer weiteren Ausführungsform ist der ersten Adresse und / oder der zweiten Adressen und / oder dem Wert zusätzlich zu der ersten Teilfunktion auch die zweite Teilfunktion zugeordnet, so dass beide Teilfunktionen ausgeführt werden.

In einer Weiterbildung der Erfindung werden Daten, die von dem Datenverarbeitungsgerät 12 an das Beeinflussungsgerät 10 gesendet werden im Speicher des Beeinflussungsgeräts 10 gespeichert.

Die Erfindung wird nachfolgend unter Bezugnahme auf die Zeichnungen näher erläutert. Hierbei werden gleichartige Teile mit identischen Bezeichnungen beschriftet. Die dargestellte Ausführungsformen sind stark schematisiert, d.h. die Abstände und laterale und vertikale Erstreckung sind nicht maßstäblich und weisen, sofern nicht anders angegeben auch keine ableitbare geometrische Relation zueinander auf. Darin zeigen die:
- Figur 1: eine schematische Ansicht auf den strukturellen Aufbau eines Kraftfahrzeug-Steuergeräts, eines erfindungsgemäßen Beeinflussungsgeräts und eines Datenverarbeitungsgeräts,
- Figur 2: eine schematische Ansicht auf eine erste erfindungsgemäße Ausführungsform eines Verfahrens zur Verarbeitung von Daten in einem Beeinflussungsgerät,
- Figur 3: eine schematische Ansicht auf eine weitere erfindungsgemäße Ausführungsform eines Verfahrens zur Verarbeitung von Daten in einem Beeinflussungsgerät,
- Figur 4: eine schematische Ansicht auf die Anordnung eines Kraftfahrzeug-Steuergeräts und eines Beeinflussungsgeräts in einem Labor nach dem Stand der Technik,
- Figur 5: eine schematische Ansicht auf die Anordnung eines Kraftfahrzeug-Steuergeräts und eines Beeinflussungsgeräts in einem Kraftfahrzeug nach dem Stand der Technik,
- Figur 6: eine schematische Ansicht auf den strukturellen Aufbau eines Kraftfahrzeug-Steuergeräts und eines Beeinflussungsgeräts nach dem Stand der Technik.

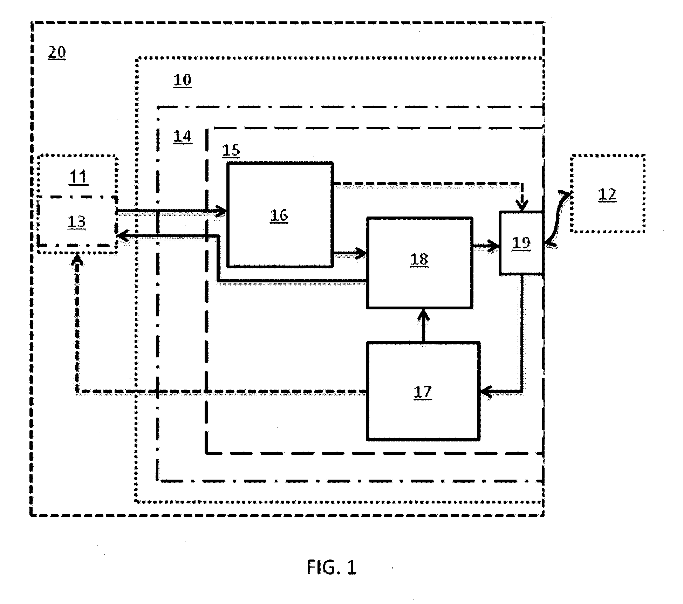

Figur 1 zeigt eine schematische Ansicht auf den strukturellen Aufbau eines Kraftfahrzeug-Steuergeräts 11, eines Beeinflussungsgeräts 10 und eines Datenverarbeitungsgeräts 12. Das Kraftfahrzeug-Steuergerät 11 ist mit einem Beeinflussungsgerät 10 verbunden, wobei das Kraftfahrzeug-Steuergerät 11 und das Beeinflussungsgerät 10 zusammen in einem Gehäuse 20 oder in zwei verschiedenen Gehäusen angeordnet sind.

Weiterhin ist das Beeinflussungsgerät 10 mit einem Datenverarbeitungsgerät 12 über eine Schnittstelle 19 verbunden. Ein Datenverarbeitungsgerät 12 ist beispielsweise ein Personal Computer, ein Simulator oder ein Prozessorboard. Eine Datenübertragung zwischen dem Beeinflussungsgerät 10 und dem Datenverarbeitungsgerät 12 erfolgt gemäß dem XCP-Protokoll oder dem CCP-Protokoll.

Das Beeinflussungsgerät 10 enthält eine Ausführungseinheit 14. Mittels dieser Ausführungseinheit 14 werden Daten aus dem Kraftfahrzeug-Steuergerät 11 gelesen. Auf der Ausführungseinheit 14 läuft ein zweites Programm 15. Beispielsweise erhält die Ausführungseinheit 14 die Daten über eine Trace-Schnittstelle des Kraftfahrzeug-Steuergeräts 11 oder liest die Daten aus einem Speicher 13 des Kraftfahrzeug-Steuergeräts 11 mittels des zweiten Programms 15 aus. Ein Wert eines vom Kraftfahrzeug-Steuergeräts 11 übertragenen Datums 16 wird nicht wie im Stand der Technik vom Beeinflussungsgerät 10 unverändert gemäß dem XCP-Protokoll oder dem CCP-Protokoll an das Datenverarbeitungsgerät 12 übertragen, sondern erfindungsgemäß in der Ausführungseinheit 14 des Beeinflussungsgeräts 10 überprüft und / oder manipuliert. Es erfolgt somit eine Datenvorverarbeitung 18 in der Ausführungseinheit 14, wobei die Ausführungseinheit 14 entweder dieselbe ist, welche die Daten vom Kraftfahrzeug-Steuergerät 11 empfängt oder eine weitere Ausführungseinheit 14 im Beeinflussungsgerät 10.

Ebenso werden Daten 17, die das Beeinflussungsgerät 10 von dem Datenverarbeitungsgerät 12 gemäß dem XCP-Protokoll oder dem CCP-Protokoll erhält in der Ausführungseinheit 14 des Beeinflussungsgeräts 10 erfindungsgemäß mittels der Datenvorverarbeitung 18 vorverarbeitet, bevor sie an das Kraftfahrzeug-Steuergerät 11 übertragen werden. Beispielsweise werden die Werte der vom Datenverarbeitungsgerät 12 an das Beeinflussungsgerät 10 übertragenen Daten überprüft und / oder manipuliert.

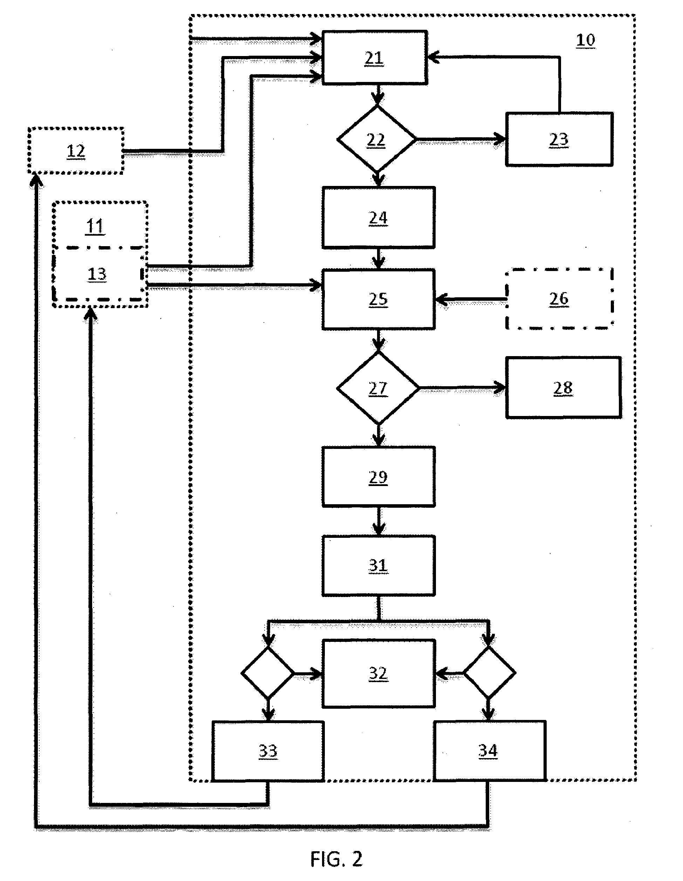

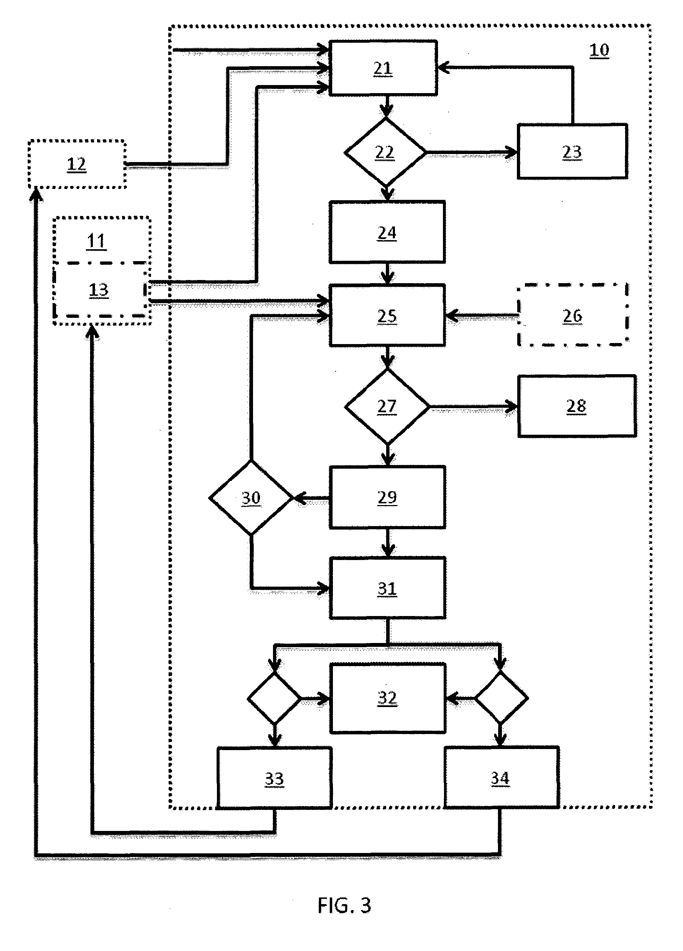

Figur 2 und Figur 3 zeigen eine schematische Ansicht auf erfindungsgemäße Ausführungsformen eines Verfahrens zur Verarbeitung von Daten in dem Beeinflussungsgerät 10.

Das Beeinflussungsgerät 10 empfängt in einem ersten Verfahrensschritt 21 einen Trigger von dem Kraftfahrzeug-Steuergerät 11, dem Datenverarbeitungsgerät 12 oder dem Beeinflussungsgerät 10 selbst. Ein Trigger von dem Beeinflussungsgerät 10 selbst kann zum Beispiel durch einen festgelegten Zeitpunkt ausgelöst werden.

Mit dem Trigger ist eine Information verknüpft, ob aus dem Kraftfahrzeug-Steuergerät 11 übertragene Daten 16 an das Datenverarbeitungsgerät 12 übertragen werden sollen und / oder ob von dem Datenverarbeitungsgerät 12 übertragene Daten 17 an das Kraftfahrzeug-Steuergerät 11 übertragen werden sollen.

In einem Speicher 26 des Beeinflussungsgeräts 10 sind zum Zeitpunkt des Triggers implementierte Funktionen gespeichert, wobei die Funktionen im gleichen Speicherbereich wie die Daten im Speicher 26 gespeichert sind oder in einem anderen Speicherbereich des Speichers 26 gespeichert sind. Die Funktionen sind entweder separat gespeichert oder in einem Programm zusammengefasst. Die bereits implementierten Funktion werden von der Ausführungseinheit 14 aufgerufen und steuern beispielsweise das Auslesen von Daten aus dem Kraftfahrzeug-Steuergerät 11, die Übertragung von Daten aus dem Speicher 13 des Kraftfahrzeug-Steuergeräts 11 oder dem 26 Speicher des Beeinflussungsgeräts 10 an das Datenverarbeitungsgerät 12 oder die Übertragung von Daten aus dem Speicher 26 des Beeinflussungsgeräts 10 an das Kraftfahrzeug-Steuergerät 11. Der Speicher 26 des Beeinflussungsgeräts 10 enthält beispielsweise Daten 16 aus dem Kraftfahrzeug-Steuergerät 11, Daten 17 aus dem Datenverarbeitungsgerät 12 oder vorgegebene bzw. konfigurierte Daten.

In einem zweiten Verfahrensschritt 22 prüft das Beeinflussungsgerät 10, ob eine gültige Zuordnung des Triggers zu einer Funktion vorliegt. Falls keine gültige Zuordnung des Triggers zu einer Funktion vorliegt, wartet die Ausführungseinheit 14 in einem weiteren Verfahrensschritt 23 auf den nächsten Trigger. Gibt es eine gültige Zuordnung des Triggers zu einer Funktion, wird diese Funktion in einem Verfahrensschritt 24 gestartet.

Jeder Funktion ist eine erste Adresse in dem Speicher 26 des Beeinflussungsgeräts 10 oder dem Speicher 13 des Kraftfahrzeug-Steuergeräts 11 zugeordnet. Diese Zuordnung ist entweder in der Funktion fest implementiert oder erfolgt mittels in dem Trigger enthaltener Informationen. Anhand der ersten Adresse wird entweder aus dem Speicher 13 des Kraftfahrzeug-Steuergeräts 11 oder aus dem Speicher 26 des Beeinflussungsgeräts 10 in einem Verfahrensschritt 25 ein Wert ausgelesen. In einer weiteren Ausführungsform wurde beispielsweise mittels des Datenverarbeitungsgeräts 12 oder der Teilfunktion ein Wert in den Speicher 26 des Beeinflussungsgeräts 10 gespeichert, beispielsweise um gezielt Werte in dem Kraftfahrzeug-Steuergerät 11 zu manipulieren.
In einem weiteren Ausführungsbeispiel ist der Funktion zusätzlich zu der ersten Adresse, aus welcher der Wert gelesen wurde, eine zweite Adresse zugeordnet. Diese Zuordnung ist entweder in der Funktion fest implementiert oder erfolgt mittels in dem Trigger enthaltener Informationen.

Weiterhin weist erfindungsgemäß die Funktion eine erste Teilfunktion und / oder eine zweite Teilfunktion auf.

Der ersten Adresse und / oder einer zweiten Adresse und / oder dem Wert ist die erste Teilfunktion und / oder die zweite Teilfunktion zugeordnet. In einem weiteren erfindungsgemäßen Verfahrensschritt 27 wird die erste Adresse und / oder die zweite Adresse und / oder der Wert auf eine gültige Zuordnung zu der ersten Teilfunktion und / oder der zweiten Teilfunktion geprüft. Gibt es keine gültige Zuordnung zu der ersten Teilfunktion oder der zweiten Teilfunktion, wird die Funktion in Verfahrensschritt 28 weiter bearbeitet. Gibt es eine gültige Zuordnung, so wird die zugeordnete erste Teilfunktion und / oder die zugeordnete zweite Teilfunktion in einem Verfahrensschritt 29 gestartet und in einem Verfahrensschritt 31 bearbeitet.

In Abhängigkeit von dem Ergebnis der Abarbeitung 31 der Teilfunktion wird ein Wert von dem Beeinflussungsgerät 10 in einem Verfahrensschritt 33 an das Kraftfahrzeug-Steuergerät 11, und / oder in einem Verfahrensschritt 34 an das Datenverarbeitungsgerät 12 übertragen oder auch kein Wert übertragen 32. Beispielsweise wird in einer Teilfunktion ein Wert auf einen Fehler hin überprüft, so werden beispielsweise nur gültige Werte an das Kraftfahrzeug-Steuergerät 11 oder das Datenverarbeitungsgerät 12 übertragen. Fehlerhafte Werte, wie zum Beispiel ein Wert außerhalb eines erwarteten Wertebereichs werden entweder nicht übertragen oder manipuliert, so dass der fehlerhafte Wert beispielsweise durch einen Wert innerhalb des erwarteten Wertebereichs ersetzt wird.

In einer weiteren, nicht dargestellten Ausführungsform wird in Abhängigkeit von dem Ergebnis der Abarbeitung 31 der Teilfunktion ein Wert von dem Beeinflussungsgerät 10 in den Speicher 26 des Beeinflussungsgeräts abgelegt und beispielsweise bei später folgenden Funktionsaufrufen genutzt. Das Ablegen des Werts in den Speicher 26 erfolgt entweder statt der Übertragung an das Kraftfahrzeug-Steuergerät 11 und / oder an das Datenverarbeitungsgerät 12 oder zusätzlich.

In einer weiteren Ausführungsform wird ein Wert mittels der Teilfunktion manipuliert und der manipulierte Wert von dem Beeinflussungsgerät 10 an das Kraftfahrzeug-Steuergerät 11 und / oder an das Datenverarbeitungsgerät 12 übertragen. Eine Manipulation des Wertes ist beispielsweise eine Berechnung basierend auf dem Wert, beispielsweise die Umwandlung des Werts in einen Wert einer anderen Maßeinheit oder auch das Ersetzen des Werts durch einen anderen vorgegebenen oder berechneten Wert.

Eine weitere Ausführungsform, dargestellt in Figur 3, beinhaltet, dass nach dem Starten der Teilfunktion 29 in einem Verfahrensschritt 30 überprüft wird, ob ein weiterer Wert aus dem Speicher 13 des Kraftfahrzeug-Steuergeräts 11 oder aus dem Speicher 26 des Beeinflussungsgeräts 10 ausgelesen werden soll. Der weitere Wert wird in dem Verfahrensschritt 25 ausgelesen und die Adresse, aus welcher der weitere Wert ausgelesen wird und / oder der weitere Wert auf eine gültige Zuordnung zu der ersten Teilfunktion und / oder zweiten Teilfunktion in Verfahrensschritt 27 wiederum geprüft und im Falle einer gültigen Zuordnung die zugeordnete Teilfunktion in Verfahrensschritt 29 gestartet.

In einer weiteren Ausführungsform hat die erste Teilfunktion eine erste Priorität und die zweite Teilfunktion eine zweite Priorität. Bei Aufruf der zweiten Teilfunktion wird die Ausführung der ersten Teilfunktion unterbrochen, wenn die zweite Priorität höher als die erste Priorität ist.

In einer Weiterbildung der Erfindung wird der Inhalt der ersten Teilfunktion bzw. der zweiten Teilfunktion mittels einer Programmiersprache, beispielsweise Java, C, C+ oder C++ und / oder einer Modellierungssprache, beispielsweise *Matlab*/*Simulink* vor dem Start des zweiten Programms und / oder vor dem Start der Funktion vorgegeben. Dies bedeutet, dass eine Teilfunktion nicht immer statisch vorgegeben sein muss, sondern nach Bedarf vor dem Start des zweiten Programms oder auch nach Bedarf vor dem Start der Funktion auf ihre Funktionalität hin festgelegt wird.

Anhand einer solchen Festlegung des Inhalts wird dann in einer weiteren Ausführung ein Programmcode, beispielsweise Assemblercode erzeugt und / oder ein FPGA (Field Programmable Gate Array) programmiert und / oder konfiguriert.

## Patentansprüche

1. Verfahren zur Verarbeitung von Daten, wobei ein Beeinflussungsgerät (10) mit einem Kraftfahrzeug-Steuergerät (11) verbunden wird und das Beeinflussungsgerät (10) weiterhin mit einem Datenverarbeitungsgerät (12) verbunden wird,
wobei das Beeinflussungsgerät (10) eine erste Ausführungseinheit (14) enthält,
das Kraftfahrzeug-Steuergerät (11) und das Beeinflussungsgerät (10) in einem Kraftfahrzeug angeordnet sind oder das Kraftfahrzeug-Steuergerät (11) und das Beeinflussungsgerät (10) in einem Prüfungstand oder Laborplatz angeordnet sind,
auf dem Kraftfahrzeug-Steuergerät (11) ein erstes Programm läuft, auf der Ausführungseinheit (14) des Beeinflussungsgeräts (10) ein zweites in Software oder Hardware implementiertes Programm (15) läuft, und
zwischen dem Datenverarbeitungsgerät (12) und dem Beeinflussungsgerät (10) Daten (16, 17) gemäß einem XCP-Protokoll und / oder einem CCP-Protokoll ausgetauscht werden,
das Beeinflussungsgerät (10) einen ersten Trigger oder einen zweiten Trigger von dem Kraftfahrzeug-Steuergerät (11), von dem Datenverarbeitungsgerät (12) oder von dem Beeinflussungsgerät (10) erhält (21),
der erste Trigger auf eine gültige Zuordnung zu einer in Hardware oder Software implementierten Funktion geprüft wird (22),
bei Vorliegen einer gültigen Zuordnung die zugeordnete Funktion gestartet wird (24),
**dadurch gekennzeichnet, dass**
die Funktion eine erste Teilfunktion und / oder eine zweite Teilfunktion aufweist,
die Funktion mindestens eine erste Adresse aufweist und
mittels der ersten Adresse aus einem Speicher (26) des Beeinflussungsgeräts (10) und / oder aus einem Speicher (13) des Kraftfahrzeug-Steuergeräts (11) ein Wert ausgelesen wird (25),
die erste Adresse und / oder eine zweite Adresse und / oder der ausgelesene Wert auf eine gültige Zuordnung zu der ersten Teilfunktion und / oder der zweiten Teilfunktion geprüft wird (27),
bei Vorliegen einer gültigen Zuordnung die zugeordnete erste Teilfunktion und / oder die zugeordnete zweite Teilfunktion aufgerufen wird (29),
anhand der aufgerufenen Teilfunktion der ausgelesene Wert geprüft und / oder manipuliert wird (31) und
in Abhängigkeit des Ergebnisses der Prüfung der geprüfte Wert und / oder der manipulierte Wert von dem Beeinflussungsgerät (10) an das Kraftfahrzeug-Steuergerät (11) übertragen wird (33) und / oder an das Datenverarbeitungsgerät (12) übertragen wird (34) und / oder in den Speicher (26) des Beeinflussungsgeräts (10) abgelegt wird.

2. Verfahren nach Anspruch 1, **dadurch gekennzeichnet, dass** die Prüfung der Zuordnung der ersten Adresse und / oder einer zweiten Adresse und / oder des Werts zu der ersten Teilfunktion oder der zweiten Teilfunktion nach dem Start der Funktion erfolgt.

3. Verfahren nach Anspruch 1, **dadurch gekennzeichnet, dass** die Prüfung der Zuordnung der ersten Adresse und / oder der zweiten Adresse und / oder des Werts zu der ersten Teilfunktion oder der zweiten Teilfunktion vor dem Start der Funktion erfolgt.

4. Verfahren nach einem der vorangehenden Ansprüche, **dadurch gekennzeichnet, dass** der Inhalt der ersten Teilfunktion und / oder der zweiten Teilfunktion mittels einer Programmiersprache und / oder einer Modellierungssprache vor dem Start des zweiten Programms und / oder vor dem Start der Funktion vorgegeben wird.

5. Verfahren nach Anspruch 4, **dadurch gekennzeichnet, dass** aus dem vorgegebenen Inhalt ein Programmcode erzeugt wird und / oder ein FPGA programmiert und / oder konfiguriert wird.

6. Verfahren nach einem der vorangehenden Ansprüche, **dadurch gekennzeichnet, dass** mittels der ersten Teilfunktion oder der zweiten Teilfunktion ein Datenformat festgelegt wird.

7. Verfahren nach einem der vorangehenden Ansprüche, **dadurch gekennzeichnet, dass** der Wert, der aufgrund der Abarbeitung der ersten Teilfunktion als fehlerhaft erkannt wird, nicht an das Datenverarbeitungsgerät (12) und / oder das Kraftfahrzeug-Steuergerät (11) gesendet wird und / oder in den Speicher (26) des Beeinflussungsgeräts (10) abgelegt wird.

8. Verfahren nach einem der vorangehenden Ansprüche, **dadurch gekennzeichnet, dass** das Datenverarbeitungsgerät (12) Daten an das Beeinflussungsgeräts (10) sendet und diese Daten im Speicher (26) des Beeinflussungsgeräts (10) gespeichert werden.

## Claims

1. A method for processing data, an influencing device (10) being connected to a motor vehicle control device (11) and the influencing device (10) being further connected to a data processing device (12),
the influencing device (10) comprising a first execution unit (14),
the motor vehicle control device (11) and the influencing device (10) being disposed in a motor vehicle or the motor vehicle control device (11) and the influencing device (10) being disposed in a test stand or laboratory location,
a first program running on the motor vehicle control device (11),
a second program (15) implemented in software or hardware running on the execution unit (14) of the influencing device (10), and
data (16, 17) being exchanged between the data processing device (12) and the influencing device (10) according to an XCP protocol and/or a CCP protocol,
the influencing device (10) receiving (21) a first trigger or a second trigger from the motor vehicle control device (11), from the data processing device (12), or from the influencing device (10),
the first trigger being tested (22) for a valid association with a function implemented in hardware or software,
the associated function being started (24) if a valid association exists,
**characterized in that**
the function comprises a first partial function and/or a second partial function,
the function comprises at least one first address, and
a value is read out (25) from a memory (26) of the influencing device (10) and/or from a memory (13) of the motor vehicle control device (11) by means of the first address,
the first address and/or a second address and/or the value read out is tested (27) for a valid association with the first partial function and/or the second partial function
the associated first partial function and/or the associated second partial function is invoked (29) if a valid association exists,
the value read out is tested and/or manipulated (31) using the invoked partial function, and
depending on the results of the test, the tested value and/or the manipulated value is transmitted (33) by the influencing device (10) to the motor vehicle control device (11) and/or is transmitted (34) to the data processing device (12) and/or is saved in the memory (26) of the influencing device (10).

2. The method according to claim 1, **characterized in that** the test of the association of the first address and/or a second address and/or the value with the first partial function or the second partial function takes place after the start of the function.

3. The method according to claim 1, **characterized in that** the test of the association of the first address and/or a second address and/or the value with the first partial function or the second partial function takes place before the start of the function.

4. The method according to any one of the preceding claims, **characterized in that** the contents of the first partial function and/or of the second partial function are prescribed by means of a programming language and/or a modeling language before the second program starts and/or before the function starts.

5. The method according to claim 4, **characterized in that** a program code is generated from the prescribed contents and/or an FGPA is programmed and/or configured.

6. The method according to any one of the preceding claims, **characterized in that** a data format is defined by means of the first partial function or the second partial function.

7. The method according to any one of the preceding claims, **characterized in that** the value determined to be erroneous on the basis of the processing of the first partial function is not sent to the data processing device (12) and/or sent to the motor vehicle control device (11) and/or saved in the memory (26) of the influencing device (10).

8. The method according to any one of the preceding claims, **characterized in that** the data processing device (12) sends data to the influencing device (10) and said data are saved in the memory (26) of the influencing device (10).

## Revendications

1. Procédé de traitement de données, dans lequel un appareil d'influence (10) est relié à un appareil de commande de véhicule à moteur (11) et l'appareil d'influence (10) est en outre relié à un appareil de traitement de données (12),
sachant que l'appareil d'influence (10) comporte une première unité d'exécution (14),
l'appareil de commande de véhicule à moteur (11) et l'appareil d'influence (10) sont disposés dans un véhicule à moteur ou l'appareil de commande de véhicule à moteur (11) et l'appareil d'influence (10) sont disposés dans un poste d'essais ou un poste de laboratoire,
un premier programme court sur l'appareil de commande de véhicule à moteur (11),
un second programme (15) implémenté sous forme de logiciel ou de matériel court sur l'unité d'exécution (14) de l'appareil d'influence (10), et
des données (16, 17) sont échangées conformément à un protocole XCP et/ou un protocole CCP entre l'appareil de traitement des données (12) et l'appareil d'influence (10),
l'appareil d'influence (10) comporte un premier déclencheur ou un second déclencheur de l'appareil de commande de véhicule à moteur (11), de l'appareil de traitement des données (12) ou de l'appareil d'influence (10) (21),
le premier déclencheur est soumis à un contrôle de la validité de l'attribution à une fonction implémentée sous forme de matériel ou de logiciel (22),
en présence d'une attribution valable, la fonction attribuée est démarrée (24),
**caractérisé en ce que**
la fonction présente une première fonction partielle et/ou une seconde fonction partielle,
la fonction présente au moins une première adresse et
à l'aide de la première adresse, une valeur est extraite (25) depuis une mémoire (26) de l'appareil d'influence (10) et/ou depuis une mémoire (13) de l'appareil de commande de véhicule à moteur (11),
la première adresse et/ou une seconde adresse et/ou la valeur extraite est/sont soumise(s) à un contrôle de la validité de l'attribution à la première fonction partielle et/ou à la seconde fonction partielle (27),
en présence d'une attribution valable, la première fonction partielle attribuée et/ou la seconde fonction partielle attribuée est/sont démarrée(s) (29),
à l'aide de la fonction partielle démarrée, la valeur extraite est contrôlée et/ou manipulée (31) et
en fonction du résultat du contrôle, la valeur contrôlée et/ou la valeur manipulée est transmise (34) par l'appareil d'influence (10) à l'appareil de commande de véhicule à moteur (11) (33) et/ou à l'appareil de traitement des données (12) et/ou stockée dans la mémoire (26) de l'appareil d'influence (10).

2. Procédé selon la revendication 1, **caractérisé en ce que** le contrôle de l'attribution de la première adresse et/ou d'une seconde adresse et/ou de la valeur à la première fonction partielle ou à la seconde fonction partielle a lieu après le démarrage de la fonction.

3. Procédé selon la revendication 1, **caractérisé en ce que** le contrôle de l'attribution de la première adresse et/ou de la seconde adresse et/ou de la valeur à la première fonction partielle ou à la seconde fonction partielle a lieu avant le démarrage de la fonction.

4. Procédé selon l'une des revendications précédentes, **caractérisé en ce que** le contenu de la première fonction partielle et/ou de la seconde fonction partielle est alloué au moyen d'un langage de programmation et/ou d'un langage de modélisation avant le démarrage du second programme et/ou avant le démarrage de la fonction.

5. Procédé selon la revendication 4, **caractérisé en ce qu'**un code de programme est généré à partir du contenu alloué et/ou un FPGA est programmé et/ou configuré.

6. Procédé selon l'une des revendications précédentes, **caractérisé en ce qu'**un format de données est déterminé à l'aide de la première fonction partielle ou de la seconde fonction partielle.

7. Procédé selon l'une des revendications précédentes, **caractérisé en ce que** la valeur qui est identifiée comme étant erronée en raison de l'exécution de la première fonction partielle n'est pas transmise à l'appareil de traitement des données (12) et/ou l'appareil de commande de véhicule à moteur (11) et/ou elle est stockée dans la mémoire (26) de l'appareil d'influence (10).

8. Procédé selon l'une des revendications précédentes, **caractérisé en ce que** l'appareil de traitement des données (12) transmet des données à l'appareil d'influence (10) et ces données sont mémorisées dans la mémoire (26) de l'appareil d'influence (10).
